# DEMANDE DE BREVET EUROPEEN

(11) **EP 1 028 158 A1**
(43) Date de publication de la demande: **16.08.2000**
(21) Numéro de dépôt: 00400312.5
(22) Date de dépôt: 04.02.2000
(51) Int. Cl.: C10M 175/00

(54) **"Procédé de recyclage des huiles de synthese contenues dans les huiles de lubrifications usagées"**

(30) Priorité: 11.02.1999 FR 9901617
(71) Demandeur: Deutsch, Richard, 78290 Croissy (FR)
(72) Inventeur: Deutsch, Richard, 78290 Croissy (FR)
(74) Mandataire: Laget, Jean-Loup

(57) **Abrégé**

L'invention concerne un procédé de séparation des huiles synthétiques et des huiles minérales contenues dans l'huile de vidange usagée, dans lequel on refroidit l'huile de vidange usagée pour produire une différence de densité et de viscosité entre ces huiles pour permettre leur séparation par centrifugation.

## Description

La présente invention concerne un procédé qui permet de séparer les huiles de lubrification de type synthétique de l'huile de lubrification minérale par l'utilisation d'une cryotechnique.

Les huiles de lubrification usagées proviennent principalement de l'opération de vidange des moteurs automobiles. Ces huiles usagées sont extrêmement toxiques et une loi impose leur collecte et leur élimination en centres agréés dans toute l'Europe.

L'huile usagée, dite aussi huile de vidange des moteurs, se compose d'huiles minérales et d'additifs auxquels viennent s'ajouter les souillures dues au fonctionnement des moteurs aux températures d'utilisation (+ de 300°C). En fait, cette huile contient des constituants volatils (eau, essence, gazole), des composés solubles dans l'huile formés par oxydation (résines, savons métalliques, additifs d'indice de viscosité, composés organo-métalliques), des composés insolubles dans les huiles (particules de carbone, poussières atmosphériques, métaux, oxydes métalliques, oxydes de plomb maintenus en suspension par les détergents additionnés aux huiles), des additifs renfermant un métal, des additifs dispersants, des additifs sans cendre, des additifs antioxydants et anti-corrosifs, des métaux provenant des canalisations ou des raccords (fer, cuivre, plomb), des coussinets (argent, cadmium), des carburants (plomb tétraéthyle, entre autres).

La liste des produits cités n'est pas limitative mais donnée à titre d'exemple. Les descriptions sont communiquées à titre illustratif mais non limitatif.

L'huile s'altère et se colore par action oxydante dans les moteurs, par formation de vernis colorés et sous l'action du soufre.

L'élimination des métaux lourds, des métalloïdes, des produits complexes, des goudrons, des résidus colloïdaux et autres contenus dans les huiles usagées des moteurs est réalisée actuellement par action combinée de la chaleur, de l'acide sulfurique, des terres décolorantes, de la filtration, de la centrifugation et de la distillation.

Une autre méthode d'élimination des métaux lourds, des métalloïdes, des produits complexes, des goudrons et autres contenus dans les huiles usagées, consiste à utiliser des agents complexants afin d'extraire les métaux lourds et les métalloïdes et à compléter cette épuration par une action de centrifugation.

Les huiles de lubrification actuellement disponibles sur le marché ont beaucoup évolué car les fabricants ajoutent à l'huile de base et aux additifs courants une fraction comprise entre 5 et 10 % d'huile de synthèse, dans les pays de l'Ouest Européen, cette proportion pouvant atteindre 40 à 50 % dans les pays scandinaves, notamment en Suède, Norvège et Finlande (généralement des polyalphaoléfines) ainsi que de l'huile à très haut indice de viscosité dans une proportion variable suivant la qualité désirée de l'huile (entre 5 et 20%), ainsi que des épaississants (au minimum 5 % de polymères).

Ces additifs de plus en plus élaborés qui sont ajoutés actuellement à l'huile de base ont généré des problèmes qui ont totalement perturbé les systèmes de régénération employés jusqu'à présent par l'industrie du recyclage des huiles. De plus ces nouveaux additifs empêchent l'utilisation de techniques performantes utilisant des membranes, car ils colmatent celles-ci et ne permettent pas les séparations des produits valorisables.

En effet, la présence de polymères dans les huiles usagées a généré des problèmes très complexes dans le bas des colonnes de distillation, notamment des problèmes de prise en masse ainsi que des problèmes de solidification dans les échangeurs thermiques. Les régénérateurs ont tenté de résoudre ces problèmes par une augmentation de la température de distillation.

Cette augmentation de température de distillation dans le bas de la colonne (environ 375°C) a généré des phénomènes de craquage donnant une forte odeur à l'huile après distillation. Cette forte odeur entraîne une décote importante sur le prix de vente de l'huile régénérée. Ces phénomènes de craquage génèrent aussi une coloration des huiles imposant un traitement de décoloration poussé sur des terres décolorantes occasionnant un surcoût notable du prix de production. De plus cela n'a pas résolu les problèmes de prise en masse et de solidification dans la colonne de distillation.

La baisse du prix de l'huile de lubrification de base de type minéral rend le recyclage de celle-ci beaucoup moins attractif.

De plus, l'huile minérale ne peut pas être séparée de l'huile de synthèse par distillation fractionnée car les poids moléculaires de ces deux huiles se chevauchent.

Compte tenu des investissements mis en jeu et du faible rendement financier obtenu dans la régénération des huiles, il est important de mettre en oeuvre un procédé permettant une meilleure valorisation de ce recyclage.

L'exposé de l'invention et des revendications résout ce problème économique par la possibilité de récupérer des produits dont la valeur est au moins cinq fois supérieure à l'huile minérale.

La présente invention concerne un traitement permettant de récupérer les huiles de synthèse contenues dans les huiles de vidange par l'utilisation de la technique du froid car toutes ces huiles ont des points de congélation différents.

L'huile minérale a un point de congélation de -15°C.

L'huile à haut indice de viscosité a un point de congélation à -19°C.

L'huile de synthèse, de type polyinternaloléfine (PIO) a un point de congélation à -30°C.

L'huile de synthèse de type polyalphaoléfine (PAO) a un point de congélation à -50°C.

Les points de congélation différents permettent une séparation des phases liquide/liquide.

La première phase d'extraction des huiles de synthèse consistera d'abord à faire subir à l'huile de vidange une déshydratation mécanique ou thermique ou la combinaison des deux, suivie par une centrifugation qui donnera une huile de vidange partiellement décontaminée pouvant être utilisée dans un processus de séparation par le froid.

Cette huile de vidange sera refroidie à au moins -10°C, cette température sera adaptée aussi finement que possible avec éventuellement application d'une force de cisaillement, afin que l'ensemble des huiles reste pompable mais que le froid induise une différence de viscosité et de densité entre l'huile minérale et l'huile de synthèse. Cette différence de viscosité et de densité permettra la séparation des huiles synthétiques et des huiles minérales dans une centrifugeuse de type horizontal spécialement construite et adaptée pour fonctionner en températures négatives.

Ce traitement de séparation peut être aussi intégré dans une unité de recyclage d'huile de vidange. Dans ce cas, cette unité de séparation des huiles de synthèse et des huiles de vidange sera positionnée après la distillation. En effet, dans une unité de recyclage l'huile de vidange subit les opérations suivantes déshydratation, éventuellement démétallisation, première distillation afin d'extraire les fractions légères et le gaz oil et, ensuite, une distillation fractionnée. Dans ce cas, on traite après refroidissement, la coupe de la colonne de distillation fractionnée qui contient le mélange huile de synthèse/huile minérale.

## Revendications

1. Procédé de séparation des huiles synthétiques et des huiles minérales contenues dans l'huile de vidange usagée, caractérisé en ce qu'on refroidit l'huile de vidange usagée pour produire une différence de densité et de viscosité entre ces huiles pour permettre leur séparation par centrifugation.

2. Procédé selon la revendication 1, caractérisé en ce que l'on effectue une étape préalable de déshydratation de l'huile de vidange usagée.

3. Procédé selon la revendication 2, caractérisé en ce que l'on centrifuge à température ambiante l'huile de vidange déshydratée, avant de la refroidir.

4. Procédé selon l'une quelconque des revendications 1 à 3, caractérisé en ce que l'on refroidit à au moins -10°C l'huile de vidange.

5. Procédé selon l'une quelconque des revendications 1 à 4, caractérisé en ce qu'on applique si nécessaire une force de cisaillement pour que l'huile refroidie reste pompable.

6. Procédé selon l'une quelconque des revendications 1 à 5, caractérisé en ce qu'il est effectué après un procédé de recyclage des huiles de vidange par distillation fractionnée.

7. Procédé selon la revendication 6, caractérisé en ce qu'il est appliqué au flux provenant de la coupe de la colonne de distillation qui contient le mélange huile de synthèse/huile minérale.
